# EUROPÄISCHE PATENTANMELDUNG

(11) **EP 4 431 822 A1**
(43) Veröffentlichungstag der Anmeldung: **18.09.2024**
(21) Anmeldenummer: 23161475.1
(22) Anmeldetag: 13.03.2023
(51) Int. Cl.: F24D 17/00, F24D 19/10, F24H 1/10, F24H 9/20, F24H 9/25, F24H 9/28, F24H 15/144, F24H 15/148, F24H 15/238, F24H 15/407, F24H 15/414, F24H 15/45, G01F 15/075, G01K 17/06, H05B 1/02

(54) **DURCHLAUFERHITZER UND VERFAHREN ZUM ERWÄRMEN EINER FLÜSSIGKEIT**

(71) Anmelder: Gerdes Holding GmbH & Co. KG, 21337 Lüneburg (DE)
(72) Erfinder: GERDES, Alexander, 21337 Lüneburg (DE)
(74) Vertreter: Stork Bamberger Patentanwälte PartmbB

(57) **Zusammenfassung**

Die Erfindung betrifft einen Durchlauferhitzer zum Erwärmen einer Flüssigkeit, umfassend eine fluidgängige Kanalanordnung (10) mit mindestens einem zum Erwärmen der Flüssigkeit eingerichteten Heizkanal (11) mit mindestens einem darin angeordneten elektrischen Heizelement (12), einer Steuerelektronik (13), die eingerichtet ist, elektronische Leistungsschalter (14) anzusteuern, um das mindestens eine Heizelement (12) elektrisch zu betreiben und die Heizleistung des Heizelements (12) zu steuern, wobei die Steuerelektronik (13) als Mikroprozessor-Steuerung ausgebildet ist, eine Durchflussmesseinrichtung (15), die elektrisch mit der Steuerelektronik (13) verbunden und eingerichtet ist, den durch die Kanalanordnung (10) fließenden Volumenstrom der Flüssigkeit zu erfassen und zeichnet sich dadurch aus, die Steuerelektronik (13) eingerichtet ist, mittels der Durchflussmesseinrichtung (15) bei Überschreiten einer ersten Mindestvolumenstromvorgabe den Beginn eines Zapfvorgangs sowie beim Unterschreiten einer zweiten Mindestvolumenstromvorgabe das Ende des Zapfvorgangs zu erkennen und weiter ausgebildet ist, nach dem Ende des Zapfvorgangs Verbrauchsdaten (18) des vorausgegangenen Zapfvorgangs zu ermitteln und bereitzustellen. Des Weiteren betrifft die Erfindung ein entsprechendes Verfahren zum Erwärmen einer Flüssigkeit mittels eines solchen Durchlauferhitzers.

## Beschreibung

Die vorliegende Erfindung betrifft einen Durchlauferhitzer zum Erwärmen einer Flüssigkeit, umfassend eine fluidgängige Kanalanordnung mit mindestens einem zum Erwärmen der Flüssigkeit eingerichteten Heizkanal mit mindestens einem darin angeordneten elektrischen Heizelement, einer Steuerelektronik, die eingerichtet ist, elektronische Leistungsschalter anzusteuern, um das mindestens eine Heizelement elektrisch zu betreiben und die Heizleistung des Heizelements zu steuern, wobei die Steuerelektronik als Mikroprozessor-Steuerung ausgebildet ist, eine Durchflussmesseinrichtung, die elektrisch mit der Steuerelektronik verbunden und eingerichtet ist, den durch die Kanalanordnung fließenden Volumenstrom der Flüssigkeit zu erfassen.

Des Weiteren betrifft die Erfindung ein Verfahren zum Erwärmen einer Flüssigkeit mittels eines Durchlauferhitzers, wobei der Durchlauferhitzer eine fluidgängige Kanalanordnung mit mindestens einem zum Erwärmen der Flüssigkeit eingerichteten Heizkanal mit mindestens einem darin angeordneten elektrischen Heizelement, einer Steuerelektronik, die eingerichtet ist, elektronische Leistungsschalter anzusteuern, um das mindestens eine Heizelement elektrisch zu betreiben und die Heizleistung des Heizelements zu steuern, wobei die Steuerelektronik als Mikroprozessor-Steuerung ausgebildet ist und eine Durchflussmesseinrichtung, die elektrisch mit der Steuerelektronik verbunden und eingerichtet ist, den durch die Kanalanordnung fließenden Volumenstrom der Flüssigkeit zu erfassen, umfasst.

Derartige Durchlauferhitzer und Verfahren dienen der Bereitung von Warmwasser, insbesondere der Erwärmung von Brauchwasser. Mittels der Steuerelektronik werden die elektronischen Leistungsschalter derart angesteuert, dass das Brauchwasser auf eine vorgegebene Soll-Temperatur erwärmt wird. Solche geregelten Durchlauferhitzer nehmen folglich immer nur die elektrische Leistung auf, die gerade erforderlich ist, um das Brauchwasser auf die gewünschte Soll-Temperatur zu erwärmen.

Für einen Anwender ist regelmäßig nicht erkennbar, welche elektrische Leistung ein solch geregelter Durchlauferhitzer aufnimmt. Da die für das Erwärmen des Brauchwassers aufgenommene elektrische Leistung stetig geregelt wird und von einer Vielzahl von Faktoren, wie beispielsweise der Einlauftemperatur, der Durchflussmenge, der gewünschten Soll-Temperatur usw., abhängt, ist für den Anwender der elektrische Energieverbrauch nicht erkennbar. Gerade in Zeiten steigender Energiekosten und vor dem Hintergrund einer gewünschten Reduzierung von Kohlendioxidemissionen wäre eine Rückmeldung an den Benutzer über den Energieverbrauch wünschenswert.

In der Regel wird seitens des Anwenders daher dem Energieverbrauch eines Durchlauferhitzers keine Beachtung geschenkt. Auf den Energieverbrauch eines Durchlauferhitzers kann allenfalls über den mittels eines Stromzählers festgestellten Gesamtenergieverbrauchs eines Gebäudes indirekt rückgeschlossen werden. Der Anwender erhält so jedoch keine detaillierte Kenntnis über den Energieverbrauch des Durchlauferhitzers.

Es ist daher Aufgabe der vorliegenden Erfindung, einen Durchlauferhitzer vorzuschlagen, der stets Angaben über seinen Energieverbrauch bereitstellt und so gewährleistet, dass der Anwender auf möglichst komfortable Weise über diesen informiert wird. Des Weiteren besteht die Aufgabe darin, ein entsprechendes Verfahren vorzuschlagen.

Die Aufgabe wird durch einen Durchlauferhitzer mit den eingangs genannten Merkmalen dadurch gelöst, dass die Steuerelektronik eingerichtet ist, mittels der Durchflussmesseinrichtung bei Überschreiten einer ersten Mindestvolumenstromvorgabe den Beginn eines Zapfvorgangs sowie beim Unterschreiten einer zweiten Mindestvolumenstromvorgabe das Ende des Zapfvorgangs zu erkennen und weiter ausgebildet ist, nach dem Ende des Zapfvorgangs Verbrauchsdaten des vorausgegangenen Zapfvorgangs zu ermitteln und bereitzustellen. Insbesondere ist der erfindungsgemäße Durchlauferhitzer eingerichtet, beispielsweise die dem Energieverbrauch zugeordneten Verbrauchsdaten automatisch nach jedem Zapfvorgang anzuzeigen. Besonders bevorzugt umfasst der Durchlauferhitzer hierzu eine Anzeigeeinrichtung, die entweder im Gehäuse des Durchlauferhitzers oder aber in einer Fernbedienung des Durchlauferhitzers angeordnet ist. Die Fernbedienung kann auch als App auf einem mobilen Endgerät ausgeführt sein. Vorteilhafter Weise werden so nach jedem Zapfvorgang die Verbrauchsdaten automatisch ausgegeben.

Beispielsweise ist die Steuerelektronik eingerichtet die Verbrauchsdaten für eine vorgegebene Zeitspanne anzuzeigen. Mit anderen Worten werden stets nach einem Zapfvorgang die jeweiligen Verbrauchsdaten automatisch angezeigt. So wird der Anwender besonders komfortabel - ohne weiteres Zutun - stets nach dem Abschluss eines Zapfvorgangs über den jeweiligen Verbrauch selbsttätig informiert.

Vorzugsweise ist die Steuerelektronik weiter ausgebildet, nach Abschluss des Zapfvorgangs die Bereitstellung anderer Information zumindest temporär zu unterbrechen und für die genannte Zeitdauer die Verbrauchsdaten bereitzustellen. Weiter bevorzugt werden also beispielsweise die aktuell mittels der Anzeigeeinrichtung angezeigten Informationen nach Abschluss des Zapfvorgangs für die genannte Zeitdauer durch die Verbrauchsdaten temporär "überschrieben". Nach Anzeige der Verbrauchsdaten kehrt die Anzeigeeinrichtung zum vorherigen Zustand zurück und zeigt wieder die bisherigen Informationen an.

Eine zweckmäßige Ausgestaltung der Erfindung ist dadurch gekennzeichnet, dass die Steuerelektronik eingerichtet ist, als Verbrauchsdaten die bei dem Zapfvorgang von dem Durchlauferhitzer aufgenommene elektrische Energie zu ermitteln. Mit anderen Worten entsprechen die Verbrauchsdaten derjenigen elektrischen Energie, die von der Heizeinrichtung zum Erwärmen des Wassers während des vorausgegangenen Zapfvorgangs benötigt worden ist. Anhand der bereitgestellten Verbrauchsdaten erhält der Anwender automatisch nach Abschluss des Zapfvorgangs eine Rückmeldung über den damit verbundenen Verbrauch elektrischer Energie. Weiter bevorzugt umfassen die Verbrauchsdaten auch weitere Daten, wie beispielsweise den akkumulierten Energieverbrauch, also die Summe der Energieverbräuche sämtlicher vorausgegangener Zapfvorgänge.

Eine bevorzugte Weiterbildung der Erfindung zeichnet sich dadurch aus, dass die Steuerelektronik eingerichtet ist, die aufgenommene elektrische Energie auf Basis der Ansteuerung der elektronischen Leistungsschalter rechnerisch zu ermitteln. Vorteilhafter Weise ist die Steuerelektronik eingerichtet, die aufgenommene elektrische Energie als die Verbrauchsdaten aus den bereits vorliegenden Ansteuerungsdaten der elektronischen Leistungsschalter zu ermitteln, sodass keine weiteren Komponenten erforderlich sind, um die Leistungsaufnahme messtechnisch zu ermitteln. Basierend auf der so rechnerisch ermittelten Leistungsaufnahme errechnet die Steuerelektronik beispielsweise durch zeitliche Integration oder die aufgenommene elektrische Energie.

Gemäß einer weiteren bevorzugten Ausbildung der Erfindung ist die Steuerelektronik so eingerichtet, die Berechnung der aufgenommenen elektrischen Energie durch Zählung mittels der Leistungsschalter geschalteten Halbwellen auszuführen. Die Berechnung der elektrischen Energie gestaltet sich durch Zählung der geschalteten Halbwellen besonders einfach, sodass hierfür vergleichsweise wenig Rechenleistung erforderlich ist. An die in der Steuerelektronik hierfür zum Einsatz kommenden Micro-Controller werden daher nur geringe Anforderungen hinsichtlich deren Verarbeitungsgeschwindigkeit gestellt. Dies reduziert einerseits die Bauteilkosten und führt andererseits zu einem entsprechend geringem Energieverbrauch der Steuerelektronik selbst.

Eine weitere zweckmäßige Ausbildung der Erfindung ist dadurch gekennzeichnet, dass die Steuerelektronik zur Messung der Momentanleistung der von dem mindestens einem Heizelement aufgenommenen elektrischen Leistung eingerichtete Leistungsmessmittel umfasst, und ferner ausgebildet ist, die während des Zapfvorgangs aufgenommene elektrische Energie durch Integration der Momentanleistung über die Zeitdauer des Zapfvorgangs zu ermitteln. Die Verwendung der genannten Leistungsmessmittel bietet den Vorteil, dass die tatsächliche Momentanleistung messtechnisch erfasst wird. Schwankungen der Netzspannung sowie Variationen der Netzfrequenz gehen so bei der Messung der Momentanleistung mit ein. Auf diese Weise ist eine Bestimmung der während eines Zapfvorgangs aufgenommenen elektrischen Energie mit höchster Präzision möglich.

Ein weiterer Vorteil besteht darin, dass anhand der tatsächlich gemessenen Momentanleistung durch Vergleich dieser mit einer zu erwartenden Momentanleistungsaufnahme auf mögliche Fehlfunktionen der Heizeinrichtung oder Leistungsschalter rückgeschlossen werden kann. Vorzugweise umfasst die Steuerelektronik eine hierzu eingerichtete Fehlererkennungseinrichtung, die ausgebildet ist, die vorgenannten Funktionen auszuführen.

Eine weitere zweckmäßige Ausgestaltung der Erfindung ist dadurch gekennzeichnet, dass die Steuerelektronik jeweils mindestens eine Spannungsmesseinheit sowie mindestens eine Strommessmesseinheit aufweist, die jeweils zur Messung der Effektivwerte von Heizstrom- und Heizspannung ausgebildet und eingerichtet sind, und dass die Steuerelektronik eingerichtet ist, auf Basis des gemessenen Heizstromes sowie der Heizspannung über die Zeitdauer des Zapfvorgangs die von dem mindestens einen Heizelement aufgenommene elektrische Energie zu ermitteln. Die genannten Spannungs- und Strommesseinheiten bieten den Vorteil einer Effektivwertmessung von Spannung und Strom, die die Grundlage für die präzise Bestimmung der tatsächlich aufgenommenen Energie bilden.

Eine bevorzugte Weiterbildung der Erfindung zeichnet sich dadurch aus, dass die Steuerelektronik ausgebildet ist, auf Basis der Temperaturdifferenz der mittels des zweiten Temperatursensors gemessenen Auslaufwassertemperatur und der mittels des ersten Temperatursensors gemessenen Einlaufwassertemperatur sowie eines mittels der Durchflussmesseinrichtung gemessenen Wasservolumenstromes die zur Erwärmung des Wassers erforderliche Wärmemenge zu berechnen und auf Basis der ermittelten Wärmemenge unter Berücksichtigung mindestens eines wirkungsgradrelevanten Geräteparameters die von dem mindestens einen Heizelement aufgenommene elektrische Energie während des Zapfvorgangs zu ermitteln. Vorteilhafter Weise wird so die aufgenommene elektrische Energie anhand der vom Wasser aufgenommenen Wärmemenge sowie des Wasserdurchflusses bestimmt. Zur Regelung der Heizleistung ist es stets erforderlich mittels der ersten und zweiten Temperatursensoren sowohl die Einlauf- sowie Auslaufwassertemperatur als auch die Größe des Wasservolumenstromes zu messen. Aus diesen bereits für den genannten Regelungszweck vorliegenden Temperatur- und Volumenstromdaten wird vorteilhafter Weise mittels der Steuerelektronik die während des Zapfvorgangs an das Wasser abgegebene Wärmeenergie bestimmt und auf Basis dieser auf die aufgenommene elektrische Energie rückgeschlossen. Auf diese Weise ist es möglich, die aufgenommene elektrische Energie während eines Zapfvorgangs mittels der Steuerelektronik zu ermitteln und als Verbrauchsdaten bereitzustellen, ohne dass es weiterer Bauteile bedarf.

Eine weitere zweckmäßige Ausgestaltung der Erfindung ist dadurch gekennzeichnet, dass die Steuerelektronik eingerichtet ist, als Verbrauchsdaten die bei dem Zapfvorgang durch die Kanalanordnung geflossene Wassermenge zu ermitteln. Vorteilhafterweise sind die Verbrauchsdaten nicht allein auf die verbrauchte elektrische Energiemenge beschränkt, sondern umfassen beispielsweise auch die während eines Zapfvorgangs durch die Kanalanordnung geflossene Wassermenge.

Eine weitere zweckmäßige Ausbildung der Erfindung ist dadurch gekennzeichnet, dass die Steuerelektronik eingerichtet ist, als Verbrauchsdaten die Kosten des Zapfvorgangs basierend auf der aufgenommenen elektrischen Energie und/oder der durch die Kanalanordnung geflossenen Wassermenge zu ermitteln. Vorteilhafter Weise werden so die mit einem Zapfvorgang verbundenen Kosten automatisch ermittelt und bereitgestellt. Die Steuerelektronik ist beispielsweise eingerichtet, die jeweiligen Kosten für eine Kilowattstunde elektrischer Energie und/oder die Kosten für einen Kubikmeter Wasser abzuspeichern und auf Basis dieser sowie des jeweiligen Verbrauchs die Strom- und/oder Wasserkosten, die während eines Zapfvorgangs entstehen, zu ermitteln.

Eine bevorzugte Weiterbildung der Erfindung zeichnet sich dadurch aus, dass die Steuerelektronik weiter eine Anzeigeeinrichtung umfasst, die ausgebildet ist, die nach dem Ende des Zapfvorgangs ermittelten Verbrauchsdaten zumindest temporär automatisch anzuzeigen. Wie bereits eingangs beispielhaft erläutert, bietet eine solche Anzeigevorrichtung den Vorteil, dass die Verbrauchsdaten dem Anwender automatisch nach einem Zapfvorgang angezeigt werden. Vorzugsweise beträgt die Anzeigedauer einige Sekunden, sodass der Anwender die Verbrauchsdaten ohne Hast ablesen und zur Kenntnis nehmen kann.

Des Weiteren wird die Aufgabe durch ein entsprechendes Verfahren mit den eingangs genannten Merkmalen dadurch gelöst, dass mittels der Durchflussmesseinrichtung bei Überschreiten einer ersten Mindestvolumenstromvorgabe der Beginn eines Zapfvorgangs sowie beim Unterschreiten einer zweiten Mindestvolumenstromvorgabe das Ende des Zapfvorgangs erkannt wird und nach dem Ende des Zapfvorgangs Verbrauchsdaten des vorausgegangenen Zapfvorgangs ermittelt und bereitgestellt werden.

Die mit dem erfindungsgemäßen Verfahren erzielten Vorteile entsprechen denen des erfindungsgemäßen Durchlauferhitzers. Zur Vermeidung von Wiederholungen wird daher im Zusammenhang mit dem erfindungsgemäßen Verfahren vollumfänglich auch die bereits zum erfindungsgemäßen Durchlauferhitzer genannten Vorzüge und Alternativausführungen verwiesen. Diese gelten ebenso für das erfindungsgemäße Verfahren.

Eine weitere zweckmäßige Ausbildung der Erfindung ist gekennzeichnet durch Ermitteln der bei dem Zapfvorgang von dem Durchlauferhitzer aufgenommene elektrischen Energie als Verbrauchsdaten.

Eine bevorzugte Weiterbildung der Erfindung zeichnet sich durch rechnerisches Ermitteln der aufgenommenen elektrischen Energie auf Basis der Ansteuerung der elektronischen Leistungsschalter mit der Steuerelektronik aus.

Gemäß einer weiteren bevorzugten Ausbildung der Erfindung erfolgt die Berechnung der aufgenommenen elektrischen Energie durch Zählung mittels der Leistungsschalter geschalteten Halbwellen.

Eine weitere zweckmäßige Ausgestaltung der Erfindung ist durch Messen der Momentanleistung der von dem mindestens einem Heizelement aufgenommenen elektrischen Leistung mittels einem hierzu eingerichteten Leistungsmessmittel und Ermitteln der während des Zapfvorgangs aufgenommenen elektrischen Energie durch Integration der Momentanleistung über die Zeitdauer des Zapfvorgangs gekennzeichnet.

Eine bevorzugte Weiterbildung der Erfindung zeichnet sich durch Messen der Effektivwerte von Heizstrom- und Heizspannung mittels jeweils mindestens einer Spannungsmesseinheit sowie mindestens einer Strommessmesseinheit und Ermitteln der von dem mindestens einem Heizelement aufgenommenen elektrischen Energie über die Zeitdauer des Zapfvorgangs mittels der Steuerelektronik aus.

Eine weitere zweckmäßige Ausbildung der Erfindung ist durch Messen einer Einlaufwassertemperatur mittels eines in der Kanalanordnung wasserzulaufseitig angeordneten ersten Temperatursensors und Messen einer Auslaufwassertemperatur mittels eines in der Kanalanordnung wasserauslaufseitig angeordneten zweiten Temperatursensors , Bestimmen einer Temperaturdifferenz zwischen der Auslaufwassertemperatur und der Einlaufwassertemperatur mittels der Steuerelektronik gekennzeichnet.

Eine bevorzugte Weiterbildung der Erfindung zeichnet sich durch Ermitteln der bei dem Zapfvorgang durch die Kanalanordnung geflossenen Wassermenge als Verbrauchsdaten aus. Eine weitere zweckmäßige Ausbildung der Erfindung ist gekennzeichnet durch Ermitteln der Kosten des Zapfvorgangs basierend auf der aufgenommenen elektrischen Energie und/oder der durch die Kanalanordnung geflossenen Wassermenge als Verbrauchsdaten.

Eine weitere zweckmäßige Ausgestaltung der Erfindung ist gekennzeichnet durch zumindest temporäres automatisches Anzeigen der ermittelten Verbrauchsdaten nach dem Ende des Zapfvorgangs mittels einer Anzeigeeinrichtung.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische beispielhafte Darstellung des erfindungsgemäßen Durchlauferhitzers
und
- Fig. 2: eine Blockschaltbild des erfindungsgemäßen Durchlauferhitzers.

Anhand der Zeichnung werden im Folgenden beispielhafte Ausführungsformen der erfindungsgemäßen Vorrichtung beschrieben. Sämtliche Angaben zur Vorrichtung gelten in analoger Weise auf für das erfindungsgemäße Verfahren.

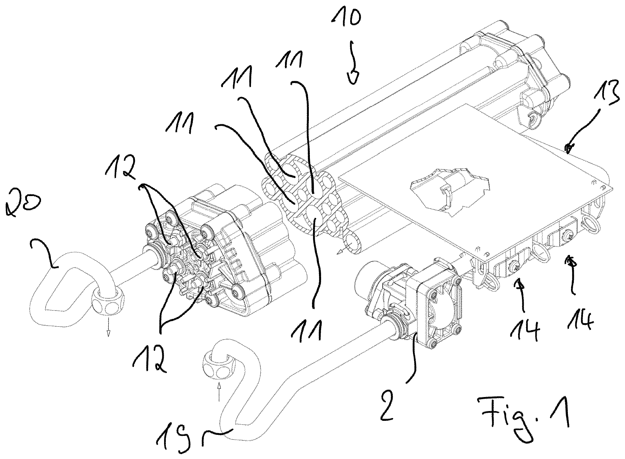

In Figur 1 ist der erfindungsgemäße Durchlauferhitzer schematisch dargestellt. Der Durchlauferhitzer umfasst eine fluidgängige Kanalanordnung 10. Diese umfasst mehrere zum Erwärmen einer Flüssigkeit eingerichteten Heizkanäle 11. In den Heizkanälen 11 ist jeweils ein elektrisches Heizelement 12 angeordnet. Weiter umfasst der erfindungsgemäße Durchlauferhitzer eine Steuerelektronik 13, die in Figur 1 vereinfacht als gedruckte Schaltung dargestellt ist.

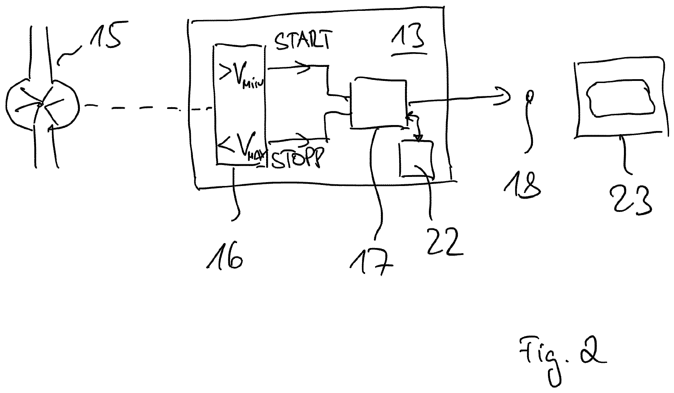

Die Funktionsweise des erfindungsgemäßen Durchlauferhitzers wird im Folgenden auch anhand der Figur 2 näher erläutert. Die Steuerelektronik 13 ist eingerichtet, elektronische Leistungsschalter 14 anzusteuern, um die Heizelemente12 elektrisch zu betreiben. Zudem ist die Steuerelektronik 13 ausgebildet, die Heizleistung der Heizelemente zu steuern.

Vorzugsweise ist die Steuerelektronik als Mikroprozessor-Steuerung ausgebildet. Der Durchlauferhitzer umfasst weitere eine - in Figur 2 gezeigte - Durchflussmesseinrichtung 15, die elektrisch mit der Steuerelektronik 13 verbunden und eingerichtet ist, den durch die Kanalanordnung 10 fließenden Volumenstrom der Flüssigkeit zu erfassen.

Die Steuerelektronik 13 ist eingerichtet, mittels der Durchflussmesseinrichtung 15 bei Überschreiten einer ersten Mindestvolumenstromvorgabe den Beginn eines Zapfvorgangs sowie beim Unterschreiten einer zweiten Mindestvolumenstromvorgabe das Ende des Zapfvorgangs zu erkennen. Die Steuerelektronik 13 umfasst hierzu beispielsweise eine Vergleichseinheit 16, die den gemessenen Volumenstrom mit den vorgegebenen Werten Vmax und Vmin vergleicht. Die Vergleichseinheit 16 ist beispielsweise eingerichtet ein Start- und ein Stoppsignal zu erzeugen, dass indikativ für den Beginn und das Ende eine Zapfvorgangs ist. Diese Signale werden beispielsweise einer Auswerteeinheit 17 zugeführt, die eingerichtet ist, nach dem Ende des Zapfvorgangs Verbrauchsdaten 18 des vorausgegangenen Zapfvorgangs zu ermitteln und bereitzustellen.

Der in Fig. 1 beispielhaft gezeigte Durchlauferhitzer umfasst zudem einen Wasserzulauf 19, der zur Zuführung der zu erwärmenden Flüssigkeit eingerichtet ist eingangsseitig mit der Kanalanordnung 10 verbunden ist. Die erwärmte Flüssigkeit wird nach dem Durchströmen über den Wasserablauf 20 zurückgeführt. In Figur 1 ist zudem ein Motorventil 21 zur Regulierung des Volumenstromes durch die Kanalanordnung 10 gezeigt. Das Motorventil 21 ist jedoch optional und für die vorliegenden Erfindung nicht wesentlich.

Vorzugsweise ist die Steuerelektronik 13 eingerichtet, als Verbrauchsdaten die bei dem Zapfvorgang von dem Durchlauferhitzer aufgenommene elektrische Energie zu ermitteln. Die Steuerelektronik 13 umfasst hier beispielsweise eine Energieermittlungseinheit, dieTeil der Auswerteeinheit 17 ist.

Insbesondere ist die Steuerelektronik 13 eingerichtet, die aufgenommene elektrische Energie auf Basis der Ansteuerung der elektronischen Leistungsschalter 14 rechnerisch zu ermitteln. Beispielsweise umfasst die Steuerelektronik 13 eine Steuer- und Regeleinheit 22, die signalleitend mit der Auswerteeinheit 17 verbunden ist.

Vorteilhafter Weise ist die Steuerelektronik 13 eingerichtet, die Berechnung der aufgenommenen elektrischen Energie durch Zählung mittels der Leistungsschalter 14 geschalteten Halbwellen auszuführen. Die Steuerung der Heizleistung der Heizelemente 13 erfolgt beispielsweise mit der Steuer- und Regeleinheit 22. Diese gibt die Zahl der Halbwellen, währenddessen die jeweiligen Heizelemente 13 eingeschaltet sind an die Auswerteinheit 17 weiter. Die Auswerteeinheit 17 bestimmt dann auf Basis dieser Steuerungsdaten durch Berechnung die aufgenommene elektrische Energie.

Weiter bevorzugt umfasst die Steuerelektronik 13 zur Messung der Momentanleistung der von dem mindestens einem Heizelement 12 aufgenommenen elektrischen Leistung eingerichtete - in der Zeichnung nicht näher gezeigte - Leistungsmessmittel. Die Steuerelektronik 13 ist ferner ausgebildet, die während des Zapfvorgangs aufgenommene elektrische Energie durch Integration der Momentanleistung über die Zeitdauer des Zapfvorgangs zu ermitteln.

Insbesondere umfasst die Steuerelektronik 13 jeweils mindestens eine Spannungsmesseinheit sowie mindestens eine Strommessmesseinheit. Diese sind jeweils zur Messung der Effektivwerte von Heizstrom- und Heizspannung ausgebildet und eingerichtet. Die genannte Effektivwertmessung von Spannung und Strom, bildet die Grundlage für die präzise Bestimmung der tatsächlich aufgenommenen Energie. Die Steuerelektronik 13 ist daher eingerichtet, auf Basis des gemessenen Heizstromes sowie der Heizspannung über die Zeitdauer des Zapfvorgangs die von dem mindestens einen Heizelement 13 aufgenommene elektrische Energie zu ermitteln.

Der erfindungsgemäße Durchlauferhitzer umfasst vorzugsweise - in der Zeichnung nicht gezeigte - erste und zweite Temperatursensoren. Der erste Temperatursensor ist zur Messung der Einlaufwassertemperatur eingerichtet, während der zweite Temperatursensor zur Messung der Wasserauslauftemperatur ausgebildet ist.

Die Steuerelektronik 13 ist ausgebildet, auf Basis der Temperaturdifferenz der mittels des zweiten Temperatursensors gemessenen Auslaufwassertemperatur und der mittels des ersten Temperatursensors gemessenen Einlaufwassertemperatur sowie eines mittels der Durchflussmesseinrichtung gemessenen Wasservolumenstromes die zur Erwärmung des Wassers erforderliche Wärmemenge zu berechnen.

Weiter ist die Steuerelektronik 13 eingerichtet auf Basis der ermittelten Wärmemenge unter Berücksichtigung mindestens eines wirkungsgradrelevanten Geräteparameters die von dem mindestens einen Heizelement aufgenommene elektrische Energie während des Zapfvorgangs zu ermitteln. Die Geräteparameter sind beispielsweise in der Steuerelektronik 13 voreingestellt und berücksichtigen beispielsweise den Gesamtwirkungsgrad des Durchlauferhitzers, Wärmeverluste oder dergleichen.

Vorzugsweise ist die Steuerelektronik 13 eingerichtet, als Verbrauchsdaten die bei dem Zapfvorgang durch die Kanalanordnung geflossene Wassermenge mittels der Durchflussmesseinrichtung 15 zu ermitteln.

Weiter bevorzugt ist die Steuerelektronik 13 eingerichtet, als Verbrauchsdaten die Kosten des Zapfvorgangs basierend auf der aufgenommenen elektrischen Energie und/oder der durch die Kanalanordnung 10 geflossenen Wassermenge zu ermitteln.

Eine bevorzugte Weiterbildung der Erfindung zeichnet sich dadurch aus, dass die Steuerelektronik 13 weiter eine Anzeigeeinrichtung 23 umfasst, die ausgebildet ist, die nach dem Ende des Zapfvorgangs ermittelten Verbrauchsdaten zumindest temporär automatisch anzuzeigen. Die Verbrauchsdaten werden dem Anwender so automatisch nach einem Zapfvorgang angezeigt. Vorzugsweise beträgt die Anzeigedauer einige Sekunden, sodass der Anwender die Verbrauchsdaten ohne Hast ablesen und zur Kenntnis nehmen kann.

Die Erfindung betrifft auch das eingangs genannte Verfahren. Die vorstehenden Ausführungen zur erfindungsgemäßen Vorrichtung gelten analog auch für das erfindungsgemäße Verfahren, sodass zur Vermeidung von Wiederholungen auf die vorherigen Ausführungen auch im Zusammenhang mit dem erfindungsgemäßen Verfahren verwiesen wird.

Gemäß dem erfindungsgemäßen Verfahren wird mittels der Durchflussmesseinrichtung 15 bei Überschreiten einer ersten Mindestvolumenstromvorgabe der Beginn eines Zapfvorgangs sowie beim Unterschreiten einer zweiten Mindestvolumenstromvorgabe das Ende des Zapfvorgangs erkannt. Nach dem Ende des Zapfvorgangs werden die Verbrauchsdaten 18 des vorausgegangenen Zapfvorgangs ermittelt und bereitgestellt. Vorzugsweise wird die bei dem Zapfvorgang von dem Durchlauferhitzer aufgenommene elektrische Energie als Verbrauchsdaten ermittelt.

Weiter bevorzugt wird die aufgenommene elektrische Energie auf Basis der Ansteuerung der elektronischen Leistungsschalter 14 mit der Steuerelektronik 13 ermittelt. Alternativ erfolgt die Berechnung der aufgenommenen elektrischen Energie durch Zählung mittels der Leistungsschalter 14 geschalteten Halbwellen.

Bevorzugt wird die Momentanleistung der von dem mindestens einen Heizelement 12 aufgenommenen elektrischen Leistung mittels einem hierzu eingerichteten Leistungsmessmittel gemessen und die während des Zapfvorgangs aufgenommene elektrische Energie durch Integration der Momentanleistung über die Zeitdauer des Zapfvorgangs berechnet.

Hierzu werden insbesondere die Effektivwerte von Heizstrom- und Heizspannung mittels jeweils mindestens einer Spannungsmesseinheit sowie mindestens einer Strommessmesseinheit gemessen und auf Basis dieser Messungen der von dem mindestens einen Heizelement 12 aufgenommenen elektrischen Energie über die Zeitdauer des Zapfvorgangs mittels der Steuerelektronik 13 ermittelt.

Vorzugsweise wird die Einlaufwassertemperatur mittels eines in der Kanalanordnung 10 wasserzulaufseitig angeordneten ersten Temperatursensors und die Auslaufwassertemperatur mittels eines in der Kanalanordnung wasserauslaufseitig angeordneten zweiten Temperatursensors gemessen und durch Bestimmen einer Temperaturdifferenz zwischen der Auslaufwassertemperatur und der Einlaufwassertemperatur seitens der Steuerelektronik 13 die aufgenommene elektrische Energie ermittelt.

Weiter zeichnet sich das Verfahren bevorzugt durch Ermitteln der bei dem Zapfvorgang durch die Kanalanordnung 10 geflossenen Wassermenge als Verbrauchsdaten 18 aus.

Die Verbrauchsdaten 18 umfassen optional die Kosten des Zapfvorgangs, die basierend auf der aufgenommenen elektrischen Energie und/oder der durch die Kanalanordnung geflossenen Wassermenge in Kenntnis der jeweiligen Kosten für Strom und Wasser als die Verbrauchsdaten ermittelt werden.

Vorzugsweise werden die ermittelten Verbrauchsdaten temporär automatisch jeweils nach dem Ende des Zapfvorgangs mittels einer Anzeigeeinrichtung 23 angezeigt.

## Patentansprüche

1. Durchlauferhitzer zum Erwärmen einer Flüssigkeit, umfassend
eine fluidgängige Kanalanordnung (10) mit mindestens einem zum Erwärmen der Flüssigkeit eingerichteten Heizkanal (11) mit mindestens einem darin angeordneten elektrischen Heizelement (12),
einer Steuerelektronik (13), die eingerichtet ist, elektronische Leistungsschalter (14) anzusteuern, um das mindestens eine Heizelement (12) elektrisch zu betreiben und die Heizleistung des Heizelements (12) zu steuern, wobei die Steuerelektronik (13) als Mikroprozessor-Steuerung ausgebildet ist,
eine Durchflussmesseinrichtung (15), die elektrisch mit der Steuerelektronik (13) verbunden und eingerichtet ist, den durch die Kanalanordnung (10) fließenden Volumenstrom der Flüssigkeit zu erfassen,
**dadurch gekennzeichnet, dass**
die Steuerelektronik (13) eingerichtet ist, mittels der Durchflussmesseinrichtung (15) bei Überschreiten einer ersten Mindestvolumenstromvorgabe den Beginn eines Zapfvorgangs sowie beim Unterschreiten einer zweiten Mindestvolumenstromvorgabe das Ende des Zapfvorgangs zu erkennen und weiter ausgebildet ist, nach dem Ende des Zapfvorgangs Verbrauchsdaten (18) des vorausgegangenen Zapfvorgangs zu ermitteln und bereitzustellen.

2. Durchlauferhitzer nach Anspruch 1, **dadurch gekennzeichnet, dass** die Steuerelektronik (13) eingerichtet ist, als Verbrauchsdaten (18) die bei dem Zapfvorgang von dem Durchlauferhitzer aufgenommene elektrische Energie zu ermitteln.

3. Durchlauferhitzer nach Anspruch 2, **dadurch gekennzeichnet, dass** die Steuerelektronik (13) eingerichtet ist, die aufgenommene elektrische Energie auf Basis der Ansteuerung der elektronischen Leistungsschalter (14) rechnerisch zu ermitteln.

4. Durchlauferhitzer nach Anspruch 3, **dadurch gekennzeichnet, dass** die Steuerelektronik (13) eingerichtet ist, die Berechnung der aufgenommenen elektrischen Energie durch Zählung mittels der Leistungsschalter (14) geschalteten Halbwellen auszuführen.

5. Durchlauferhitzer nach Anspruch 2, **dadurch gekennzeichnet, dass** die Steuerelektronik (13) zur Messung der Momentanleistung der von dem mindestens einen Heizelement (12) aufgenommene elektrische Leistung eingerichtete Leistungsmessmittel umfasst, und ferner ausgebildet ist, die während des Zapfvorgangs aufgenommene elektrische Energie durch Integration der Momentanleistung über die Zeitdauer des Zapfvorgangs zu ermitteln.

6. Durchlauferhitzer nach Anspruch 2, **dadurch gekennzeichnet, dass** die Steuerelektronik (13) jeweils mindestens eine Spannungsmesseinheit sowie mindestens eine Strommessmesseinheit aufweist, die jeweils zur Messung der Effektivwerte von Heizstrom- und Heizspannung ausgebildet und eingerichtet sind, und dass die Steuerelektronik (13) eingerichtet ist, auf Basis des gemessenen Heizstromes sowie der Heizspannung über die Zeitdauer des Zapfvorgangs die von dem mindestens einen Heizelement (12) aufgenommene elektrische Energie zu ermitteln.

7. Durchlauferhitzer nach Anspruch 2 weiter umfassend mindestens einen in der Kanalanordnung (10) wasserzulaufseitig angeordneten ersten Temperatursensor sowie mindestens einen in der Kanalanordnung wasserablaufseitig angeordneten zweiten Temperatursensor, und wobei die Steuerelektronik (13) ausgebildet ist, auf Basis der Temperaturdifferenz der mittels des zweiten Temperatursensors gemessenen Auslaufwassertemperatur und der mittels des ersten Temperatursensors gemessenen Einlaufwassertemperatur sowie eines mittels der Durchflussmesseinrichtung (15) gemessenen Wasservolumenstromes die zur Erwärmung des Wassers erforderliche Wärmemenge zu berechnen und auf Basis der ermittelten Wärmemenge unter Berücksichtigung mindestens eines wirkungsgradrelevanten Geräteparameters die von dem mindestens einen Heizelement (12) aufgenommene elektrische Energie während des Zapfvorgangs zu ermitteln.

8. Durchlauferhitzer nach einem der Ansprüche 1 bis 7, **dadurch gekennzeichnet, dass** die Steuerelektronik (13) eingerichtet ist, als Verbrauchsdaten 18 die bei dem Zapfvorgang durch die Kanalanordnung (10) geflossene Wassermenge zu ermitteln.

9. Durchlauferhitzer nach einem der Ansprüche 2 bis 8, **dadurch gekennzeichnet, dass** die Steuerelektronik (13) eingerichtet ist, als Verbrauchsdaten die Kosten des Zapfvorgangs basierend auf der aufgenommenen elektrischen Energie und/oder der durch die Kanalanordnung (10) geflossenen Wassermenge zu ermitteln.

10. Durchlauferhitzer nach einem der Ansprüche 1 bis 9, **dadurch gekennzeichnet, dass** die Steuerelektronik (13) weiter eine Anzeigeeinrichtung (23) umfasst, die ausgebildet ist, die nach dem Ende des Zapfvorgangs ermittelten Verbrauchsdaten (18) zumindest temporär automatisch anzuzeigen.

11. Verfahren zum Erwärmen einer Flüssigkeit mittels eines Durchlauferhitzers, wobei der Durchlauferhitzer eine fluidgängige Kanalanordnung (10) mit mindestens einem zum Erwärmen der Flüssigkeit eingerichteten Heizkanal (11) mit mindestens einem darin angeordneten elektrischen Heizelement (12), einer Steuerelektronik (13), die eingerichtet ist, elektronische Leistungsschalter (14) anzusteuern, um das mindestens eine Heizelement (12) elektrisch zu betreiben und die Heizleistung des Heizelements (12) zu steuern, wobei die Steuerelektronik (13) als Mikroprozessor-Steuerung ausgebildet ist und eine Durchflussmesseinrichtung (15), die elektrisch mit der Steuerelektronik (13) verbunden und eingerichtet ist, den durch die Kanalanordnung (10) fließenden Volumenstrom der Flüssigkeit zu erfassen, umfasst,
**gekennzeichnet dadurch, dass**
mittels der Durchflussmesseinrichtung (15) bei Überschreiten einer ersten Mindestvolumenstromvorgabe der Beginn eines Zapfvorgangs sowie beim Unterschreiten einer zweiten Mindestvolumenstromvorgabe das Ende des Zapfvorgangs erkannt wird und
nach dem Ende des Zapfvorgangs Verbrauchsdaten (18) des vorausgegangenen Zapfvorgangs ermittelt und bereitgestellt werden.

12. Verfahren nach Anspruch 11, **gekennzeichnet durch** Ermitteln der bei dem Zapfvorgang von dem Durchlauferhitzer aufgenommene elektrischen Energie als die Verbrauchsdaten (18).

13. Verfahren nach Anspruch 12, **gekennzeichnet durch** rechnerisches Ermitteln der aufgenommenen elektrischen Energie auf Basis der Ansteuerung der elektronischen Leistungsschalter (14) mit der Steuerelektronik (13).

14. Verfahren nach Anspruch 13, **dadurch gekennzeichnet, dass** die Berechnung der aufgenommenen elektrischen Energie durch Zählung mittels der Leistungsschalter (14) geschalteten Halbwellen erfolgt.

15. Verfahren nach Anspruch 11, **gekennzeichnet durch** Messen der Momentanleistung der von dem mindestens einen Heizelement (12) aufgenommenen elektrischen Leistung mittels einem hierzu eingerichteten Leistungsmessmittel und Ermitteln der während des Zapfvorgangs aufgenommenen elektrischen Energie durch Integration der Momentanleistung über die Zeitdauer des Zapfvorgangs.

16. Verfahren nach Anspruch 12, **gekennzeichnet durch** Messen der Effektivwerte von Heizstrom- und Heizspannung mittels jeweils mindestens einer Spannungsmesseinheit sowie mindestens einer Strommessmesseinheit und Ermitteln der von dem mindestens einen Heizelement (12) aufgenommenen elektrischen Energie über die Zeitdauer des Zapfvorgangs mittels der Steuerelektronik (13).

17. Verfahren nach Anspruch 12, **gekennzeichnet durch** Messen einer Einlaufwassertemperatur mittels eines in der Kanalanordnung (10) wasserzulaufseitig angeordneten ersten Temperatursensors und Messen einer Auslaufwassertemperatur mittels eines in der Kanalanordnung (10) wasserauslaufseitig angeordneten zweiten Temperatursensors , Bestimmen einer Temperaturdifferenz zwischen der Auslaufwassertemperatur und der Einlaufwassertemperatur mittels der Steuerelektronik (13),
Messen des Wasservolumenstromes mittels der Durchflussmesseinrichung (15) und
Ermitteln der von dem mindestens einen Heizelement (12) aufgenommene elektrische Energie während des Zapfvorgangs durch Berechnen der zur Erwärmung des Wassers erforderlichen Wärmemenge auf Basis der Temperaturdifferenz und des Wasservolumenstromes und
Ermitteln der von dem mindestens einen Heizelement (12) aufgenommenen Energie während des Zapfvorgangs auf Basis der ermittelten Wärmemenge sowie unter Berücksichtigung mindestens eines wirkungsgradrelevanten Geräteparameters.

18. Verfahren nach einem der Ansprüche 11 bis 17 **gekennzeichnet durch** Ermitteln der bei dem Zapfvorgang durch die Kanalanordnung geflossenen Wassermenge als die Verbrauchsdaten (18).

19. Verfahren nach einem der Ansprüche 11 bis 18, **gekennzeichnet durch** Ermitteln der Kosten des Zapfvorgangs basierend auf der aufgenommenen elektrischen Energie und/oder der durch die Kanalanordnung (10) geflossenen Wassermenge als die Verbrauchsdaten (18).

20. Verfahren nach einem der Ansprüche 11 bis 19, **gekennzeichnet durch** zumindest temporäres automatisches Anzeigen der ermittelten Verbrauchsdaten nach dem Ende des Zapfvorgangs mittels einer Anzeigeeinrichtung (23).
